# EUROPÄISCHE PATENTANMELDUNG

(11) **EP 0 594 542 A1**
(43) Veröffentlichungstag der Anmeldung: **27.04.1994**
(21) Anmeldenummer: 93810741.4
(22) Anmeldetag: 21.10.1993
(51) Int. Cl.: E04D 3/36, F16B 2/06

(54) **Halterung für flächige Abdeckelemente**

(30) Priorität: 23.10.1992 CH 3307/92
(71) Anmelder: WEBER METALLBAU, CH-8245 Feuerthalen (CH)
(72) Erfinder: Weber, Alfred, CH-8245 Feuerthalen (CH)
(74) Vertreter: Patentanwälte Breiter + Wiedmer AG

(57) **Zusammenfassung**

Die Halterung für flächige Abdeckelemente (10) mit wenigstens einem abgewinkelten Schenkel (18) ist an im wesentlichen U-, T- oder L-förmigen Profilen (12) einer Unterkonstruktion befestigt.

Ein in beliebiger Lage innenliegend angeordnetes Klemmstück (28) umfasst ein am Schenkel (18) befestigtes, abgewinkeltes Halteprofil (26) und ein vorgespannt schwenk- oder elastisch biegbares Klemmteil (32). Ein Lappen (36) des U-, T- oder L-Profils (12), wenigstens auf der Stirnseite (22) des abgewinkelten Schenkels (18) und/oder auf der Stirnseite (30) des Halteprofils (26) aufliegend, ragt in den Innenraum des Klemmstücks (28). Das schwenkbare Ende (34) des Klemmteils (32) im Bereich der Auflage ist auf den Lappen (36) des T-oder L-Profils (12) gespannt.

Die Verwendung der Halterung liegt z.B. im Hochbau, zur Befestigung von Fassaden-, Wand- und Deckenplatten, im Apparatebau und im Bau von Elektrokasten.

## Beschreibung

Die Erfindung bezieht sich auf eine Halterung für flächige Abdeckelemente mit wenigstens einem abgewinkelten Schenkel an im wesentlichen T- oder L-förmigen Profilen einer Unterkonstruktion.

Im Hochbau beispielsweise werden rohe Wände und Decken von Gebäuden, insbesondere Industrie-, Gewerbe-, Dienstleistungs- und Verwaltungsbauten, zunehmend mit vorgehängten, plattenförmigen Elementen verkleidet, welche hinterlüftet aufgehängt sind. Dies giltfür Fassaden, Innenwände und Decken. Auf der Aussenseite verleihen die vorgehängten Fassadenflächen einen Witterungsschutz und wirken ausserdem dekorativ. Im innern Bereich steht die dekorative Funktion im Vordergrund.

Die Dimensionen der Elemente richten sich nach dem Charakter des Gebäudes, sie sind im allgemeinen etwa 20 - 120 cm breit und erstrecken sich über wenigstens einen Teil der Höhe eines Stockwerkes, über mehrere Stockwerke oder gar über die ganze Gebäudehöhe. Zwischen den Platten werden etwa 1 cm breite Fugen offengelassen, welche neben ihrer Wirkung als Dehnungsfugen auch als Schattenfugen wirken und einen dekorativen Effekt erzielen. Im Aussenbereich werden die Fugen unterhalb der Oberfläche abgedichtet oder, unter Verzicht auf die Wirkung als Schattenfuge, mit einer beispielsweise anklipsbaren Deckleiste versehen. Das letztere kann einen eigenständigen dekorativen Effekt entfalten.

Dünne Fassaden-, Wand- oder Deckenelemente sind zweckmässig wenigstens an ihren Längsseiten abgekantet. Bei Kassettendecken beispielsweise können auch alle vier Längsseiten der Elemente abgekantet sein.

Die Abkantungen dienen der Befestigung an der Unterkonstruktion, welche ihrerseits an der rohen Wand oder Decke befestigt ist. Bekannte Unterkonstruktionen bestehen beispielsweise aus Aufhängebolzen oder Aufhängeschienen mit entsprechenden Bolzen. Über abgewinkelte Nuten in den Abkantungen sind die Fassaden-, Wand- oder Deckenelemente aufgehängt. Offensichtlich müssen Bolzen und Nuten nach einem Plan genau aufeinander abgestimmt angefertigt werden. Bei Ungenauigkeiten müssen Bolzen versetzt und/oder Nuten ausgefeilt werden, was nicht nur mühsam, sondern auch kostspielig ist.

In der DE, C2 3048152 wird eine Plattenhalterung für Fassaden- oder Dachkonstruktionen vorgeschlagen, welche aus einem Profilstab und mindestens einem in seiner Haltestellung in diesem gehaltenen Anker mit einem Innengewinde zum Einschrauben einer Schraube und einem hammerkopfartigen, mit Drehsicherungsmitteln versehenen Fuss besteht. Dieser Fuss greift in eine hinterschnittene Nut des Profilstabes ein und wird unter Verformung eines Klemmteils am Profilstab festgeklemmt. Das ausserhalb der Nut befindliche Klemmteil ist federnd ausgebildet und weist mindestens eine Rastnase auf, die in der Haltestellung bei einer im Profil des Profilstabes vorhandenen Stelle eingerastet ist. Mit dieser Plattenhalterung können beispielsweise Mehrfachglasplatten und Isolierplatten befestigt werden, ohne dass die Position der Halterungen einjustiert werden muss. Für die Halterung von abgekantetet Fassaden-, Wand- oder Deckenelementen wäre die Halterung gemäss der DE, C2 3048152 zu kompliziert und zu teuer, überdies müssten die Elemente statt einfach in Form eines L doppelt in Form eines U abgekantet werden.

Auch in zahlreichen anderen Bereichen als im Hochbau werden Abdeckungen verwendet, beispielsweise im Apparatebau und beim Bau von Elektrokästen.

Der Erfinder hat sich die Aufgabe gestellt, eine Halterung der eingangs genannten Art zu schaffen, welche eine Einjustierung von Unterkonstruktion und/oder Auf hängemittein von Abdeckungen ganz allgemein vermeidet, was eine Einsparung an Montagezeit, eine Erhöhung des Montagekomforts und eine Verbesserung der Montagepräzision bringen soll.

Die Aufgabe wird erfindungsgemäss nach dem Kennzeichen von Patentanspruch 1 gelöst. Weiterbildende und vorteilhafte Ausführungsformen der Erfindung sind Gegenstand von abhängigen Patentansprüchen.

Das schwenkbare Klemmteil ist nach einer ersten Variante als abgewinkeltes Klemmprofil ausgebildet. Zwischen diesem Klemmprofil und dem Halteprofil ist eine Montagefeder, vorzugsweise eine Blattfeder angeordnet, welche im Klemmstück die öffnende Vorspannung erzeugt. Diese verhältnismässig starke Montagefeder, bevorzugt aus rostfreiem Federstahl, hat neben der Montagehilfe eine weitere Funktion, sie dient dem Spannungsausgleich.

Nach einer zweiten Variante ist das schwenkbare Klemmteil als abgerundete Klemmfeder, vorzugsweise ebenfalls aus rostfreiem Federstahl, ausgebildet. Sie wirkt in vergleichbarer Weise wie das abgewinkelte Klemmprofil und kann ebenfalls durch eine Montagefeder ergänzt sein. Die Klemmfederwird in der letzten Phase des Spannungsvorgangs neben dem Schwenken noch deformiert, also leicht gebogen. Die Klemmfeder kann auch durch ein abgewinkeltes Klemmprofil gestützt sein.

Die Schwenkbewegung des Klemmteils erfolgt bevorzugt über ein Schwenklager. Nach einer ersten Ausführungsform ist dem Halteprofil ein Schwenklager, dem Klemmteil ein die Schwenkachse bildender Schwenkzylinder angeformt. Der Schwenkzylinder wird in axialer Richtung in das über einen Winkel von beispielsweise etwa 90° längsseitig offene Schwenklager gestossen. Selbstverständlich kann das Schwenklager auch dem Klemmteil und der entsprechend ausgebildete Schwenkzylinder dem Halteprofil angeformt sein. Die Öffnungsbewegung wird durch entsprechend ausgebildete Anschlagflächen begrenzt.

Nach einer weiteren Variante kann das Klemmteil als einends fest im Halteprofil, beispielsweise in einem Schlitz, gehalterte Klemmfeder ausgebildet sein. Selbstverständlich lässt diese Befestigung keinerlei Schwenkbewegung zu, das Schliessen der Klemmfeder erfolgt ausschliesslich durch elastische Deformation, also durch Biegen. Dabei muss der Übergang von der befestigten zur freien Klemmfeder besonders beachtet werden, mit an sich bekannten konstruktiven Massnahmen mussverhindertwerden, dass die Klemmfeder geknickt wird. Dies erfolgt beispielsweise durch das Anlegen an eine entsprechend abgerundete Auflagefläche.

Das die Klemmwirkung erzeugende schwenkbare Ende des Klemmteils bewirkt mit dem in das Klemmstück ragenden Lappen des U-, T- oder L-Profils der Unterkonstruktion einen Kraftschluss. Vorzugsweise ist das erwähnte freie Ende in Richtung des Lappens des U-, T- oder L-Profils spitzwinklig ausgebildet, unter Bildung einer Eindrücknase. Die Eindrücknase, dies ist wesentlich, kann nicht nur einstückig, sondern auch als aufsteckbares, anschraubbares oder sonstwie befestigtes Federteil ausgebildet sein, beispielsweise als Flachfeder. Die beim Festklemmen im Lappen des U-, T- oder L-Profils erzeugte Kerbe bewirkt in Ergänzung des Kraftschlusses einen Formschluss, welcher die Wirkung langfristig langsamer verliert als ein reiner Kraftschluss.

Die Klemmwirkung wird bevorzugt mittels einer Spannschraube erzeugt, welche das Klemmstück an einem beliebigen Ort an derflächigen Abdeckung befestigt. Sowohl das Klemmstück selbst als auch der Kopf der Spannschraube sind versteckt angeordnet. Je nach den Dimensionen der Elemente und deren mechanischen Festigkeit werden die Klemmstücke in einem entsprechenden Abstand angeordnet. Die Schraubenköpfe werden mit einem Spezialwerkzeug oder einem verkürzten Imbusschlüssel angezogen.

Je nach der Verwendung, dem zu erzielenden Schutz und/oder der dekorativen Wirkung bestehen die flächigen Abdeckungselemente nach einer ersten Variante aus einem Metall, beispielsweise Aluminium, einerAluminium-Legierung, Kupfer, Eisen oder Stahl, einem Kunststoff oder aus einem Verbundwerkstoff, beispielsweise einer Kernschicht aus einem Kunststoff und Deckflächen aus Aluminiumblechen. Solche Verbundwerkstoffe sind beispielsweise unter der Bezeichnung ALUCOBOND der Alusuisse-Lonza AG bekannt. Für Fassaden-Elemente wird beispielsweise eine 2 - 3 mm dicke Kernschicht mit 0,2 - 0,5 mm dicken Deckblechen aus einer Aluminium-Legierung verwendet. Diese Abdeckungen werden abgekantet, auf einer, zwei oder umlaufend auf allen vier Seiten (Kassetten), oder entsprechend ein abgewinkelter Schenkel befestigt, z.B. durch Schweissen, Nieten oder Kleben. Der Schenkel kann auch durch in Abstand angeordnete Winkelstücke ersetzt sein.

Nach einer zweiten Variante können die Abdeckelemente aus einem schlecht oder nicht biegbaren Material bestehen, z.B. aus Keramikplatten, Glasplatten oder Holzplatten. Wenigstens eine Seite der Platte hat einen durch Kleben, Schrauben usw. befestigten abgewinkelten Schenkel zur Aufnahme des Klemmstücks.

Verwendung findet die Halterung fürflächige Abdeckelemente z.B. im
- Hochbau, als Fassaden-, Wand- und Deckenelemente
- Apparatebau, für Abdeckungen
- Bau von Elektrokasten, für Abdeckungen und Türen, letztere auf einer Seite mit Scharnieren.

Die Unterkonstruktion, das Halteprofil und das Klemmprofil bestehen bevorzugt aus einem Metall, wie Aluminium, einer Aluminium-Legierung oder Stahl, oder aus einem Kunststoff hoher mechanischer Festigkeit und mit geringen Fliesseigenschaften, wie einem Polyäthylen oder einem Polyamid.

Kurz zusammengefasst haben die erfindungsgemässen Fassaden-, Wand- oder Deckenelemente gegenüber üblichen Aufhängesystemen die folgenden Vorteile:
- Das aufwendige Positionieren und Anbringen von Einhängebolzen und Einhängenuten entfällt. Die abgewinkelten Schenkel bzw. Abkantungen liegen auf dem betreffenden Lappen des T- oder L-Profils der Unterkonstruktion auf, was eine Dichtung bewirkt. Die Dichtung ist wirksam gegen Wasser, Ungeziefer, Staub, Schallwellen usw.
- Jedes beliebige Element kann auch einzeln ausgewechselt werden, weil die Klemmstücke individuell geöffnet und das Element ohne seitliche Bewegung nach vorn entfernt werden kann.
- Die Elemente können problemlos gerichtet werden, indem sie vorerst positioniert und dann die Klemmstücke angezogen werden. Jedes Versetzen von Bolzen oder Ausfeilen von Nuten entfällt.
- Die sehr einfachen Abdeckelemente, insbesondere auch mit umlaufenden abgewinkelten Schenkeln, haben alle die gleiche Höhe, was mit sehr geringem Aufwand jegliche Formgebung erlaubt, auch abgerundete Ecken. Dadurch können die Fertigungskosten bis 50 % gesenkt werden, was bei bis 30 % verminderten Montagekosten stark ins Gewicht fällt.
- Da die Unterkonstruktion flächenbündig montiertwerden kann und die Abdeckelemente umlaufend gleiche Schenkelhöhen haben, ist die abzudeckende Fläche völlig geschützt.
- Weil kein Ausklinken notwendig ist, genügt eine geringe Bauhöhe, was sich z.B. in den Kubuskosten eines Gebäudes massiv niederschlägt.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 eine Ansicht einer Halterung für ein Fassadenelement, mit einem geschlossenen Klemmstück,
- Fig. 2 eine Variante von Fig. 1, mit geöffnetem Klemmstück,
- Fig. 3 eine Ansicht einer deformierbaren Montage- oder Klemmfeder,
- Fig. 4 eine Ansicht einer schwenkbaren Klemmfeder,
- Fig. 5 eine Seitenansicht einer Eindrücknase,
- Fig. 6 eine Ansicht einer biegbaren Klemmfeder,
- Fig. 7 eine Schraubenmutter, und
- Fig. 8 eine Ansicht einer Variante eines Klemmstücks.

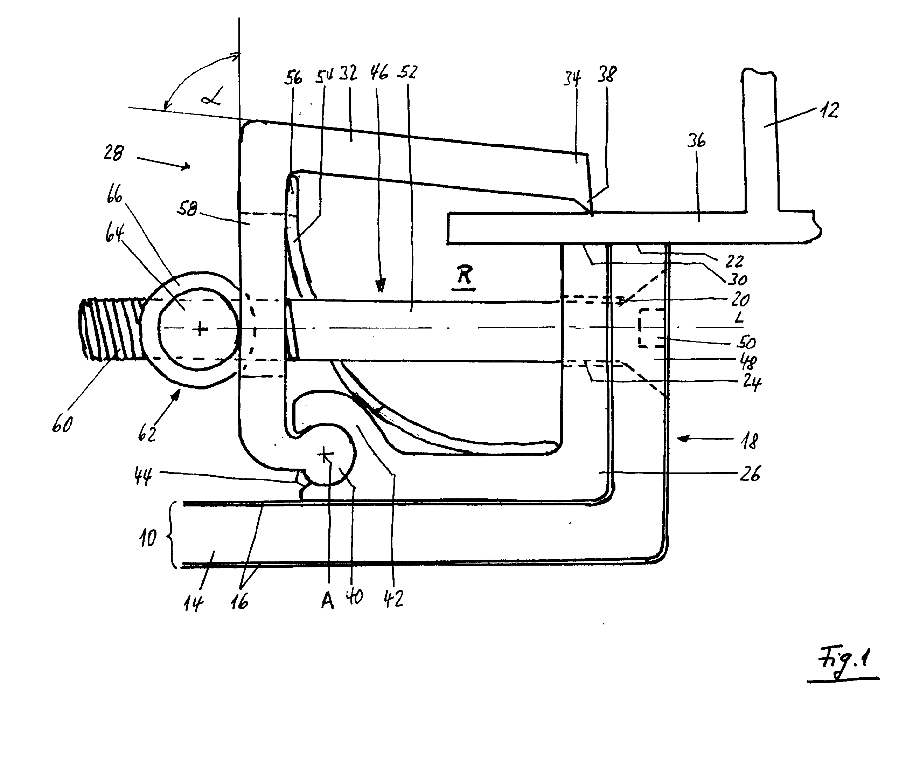

In Fig. 1 ist die Befestigung eines abgekanteten Fassadenelements 10, welches auch ein Wand- oder Deckenelement sein könnte, an einer Unterkonstruktion mit einem T-förmigen Profil 12 gezeigt. Das Fassadenelement 10 besteht aus einer Kernschicht 14 aus Polyäthylen und zwei Deckblechen 16 ausAluminium. Im vorliegenden Fall sind die Deckbleche etwa 0,2 mm und die Kernschicht etwa 3 mm dick.

Im als Abkantung ausgebildeten abgewinkelten Schenkel 18 des Fassadenelements 10 ist an senkrecht zur Zeichnungsebene beliebiger Stelle eine Bohrung 20 mit einer kegelmantelförmigen Anschrägung für einen Schraubenkopf ausgespart. Der Abstand der Bohrung 20 von der Stirnseite 22 der Abkantung 18 entspricht etwa dem Abstand der Bohrung 24 im Halteprofil 26 eines Klemmstücks 28 von dessen Stirnseite 30.

Das Klemmstück 28 umfasst neben dem Halteprofil 26 ein als Klemmprofil 32 ausgebildetes Klemmteil, welches etwa rechtwinklig ist. Im vorliegenden Fall haben Halteprofil 26 und Klemmprofil 32 eine Wandstärke von etwa 3 mm, das Klemmprofil 32 hat einen Winkel a von etwa 85°. Das schwenkbare Ende 34 des Klemmprofils 32 weist in Richtung eines Schenkels 36 des T-förmigen Profils 12 eine spitzwinklige Eindrücknase 38 auf.

Die Schwenkachse A des Klemmprofils 32 wird durch einen angeformten Schwenkzylinder 40 gebildet, welcher in ein entsprechend ausgebildetes, an das Halteprofil 26 angeformtes Schwenklager42 eingeschoben ist. Anschlagflächen 44 begrenzen die Öffungsbewegung des Klemmprofils 32.

Eine Spannschraube 46 dient dem Schliessen des Klemmstücks 28. Der in der Bohrung 20 der Abkantung 18 des Fassadenelements 10 versenkte Schraubenkopf 48 hat ein Imbusloch 50, in welches ein geeignetes Werkzeug zum Drehen der Spannschraube 46 eingeführt werden kann. Ein Schraubenschaft 52 durchgreift die Abkantung 18, die Bohrung 24 des Halteprofils 26, ein Langloch 54 einer als Blattfeder ausgebildeten Montagefeder 56 und ein Langloch 58 des Klemmprofils 32. Das vom Schraubenkopf 48 abgewandte Ende des Schraubenschafts 52 hat ein Aussengewinde 60.

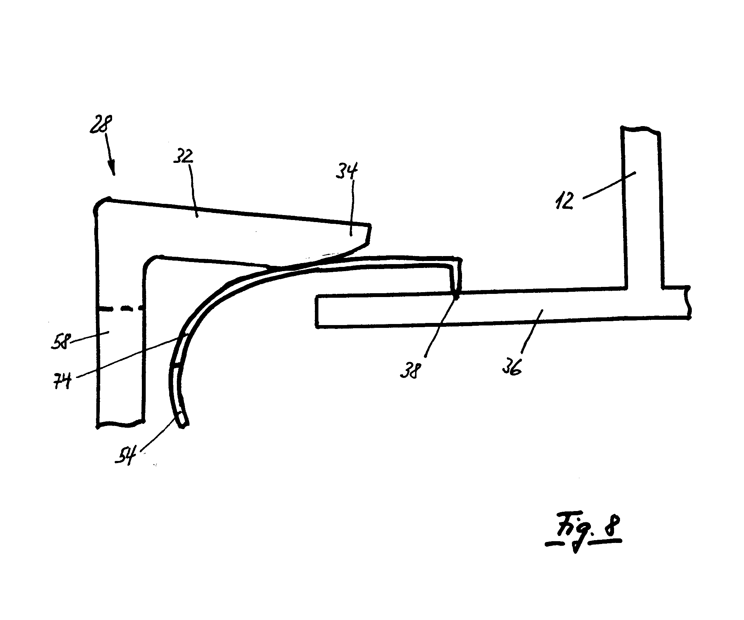

Auf dem Aussengewinde 60 ist eine drehsichere Mutter 62 aufgesetzt, welche auch in Fig. 7 dargestellt ist. Die im wesentlichen stabförmig ausgebildete Schraubenmutter 62 hat beidends eingeengte, auf dem Klemmprofil 32 aufliegende Enden 64 und ein Mittelteil 66, welches, die Drehsicherung bewirkend, in das Langloch 58 des Klemmstücks 32 hineinragt. Im vorliegenden Fall ist die Schraubenmutter 62 im wesentlichen zylinderförmig ausgebildet. Sie kann jedoch von beliebiger Gestalt sein, von wesentlicher Bedeutung ist lediglich, dass ein Mittelteil 66 zur Bildung der Drehsicherung in das Langloch 58 eingreifen kann. Weiter ist von Vorteil, dass die Enden 64 der Schraubenmutter 62 wenigstens in Richtung des Klemmprofils 32 abgerundet sind, damit in jedem Schwenkwinkel eine kontinuierliche Auflage besteht.

Beim Anziehen der Spannschraube 46 mit der Längsachse Lwird das Klemmprofil 32 gegen den Widerstand der Montagefeder 56 geschwenkt und schliesslich die Eindrücknase 38 in den Schenkel 36 gedrückt, welcher auf den Stirnseiten 22 der Abkantung 18 des Fassadenelements 10 und der Stirnseite 30 des Halteprofils 26 aufliegt. Am Schluss der Spannbewegung wird auch das Schwenkprofil 32 leicht deformiert. Die von der Eindrücknase 38 erzeugte Einkerbung im Schenkel 36 bewirkt einen Formschluss, welcher auch bei einem allfälligen langfristigen Nachlassen der Spannkraft des Spannprofils 32 noch einen sicheren Halt gewährleistet.

Nach einer nicht dargestellten Ausführungsform kann der das schwenkbare Ende 34 umfassende Schenkel des Klemmprofils 32 so lange ausgebildet sein, dass die Eindrücknase 38 oberhalb der Abkantung 18 auf den Schenkel 36 einwirkt. Von wesentlicher Bedeutung ist, dass kein Drehmoment auf das Klemmstück 28 einwirken kann.

Beim Lösen der Spannschraube 52 bewirkt der Druck der Montagefeder 56, dass das Klemmprofil 32 geöffnet wird.

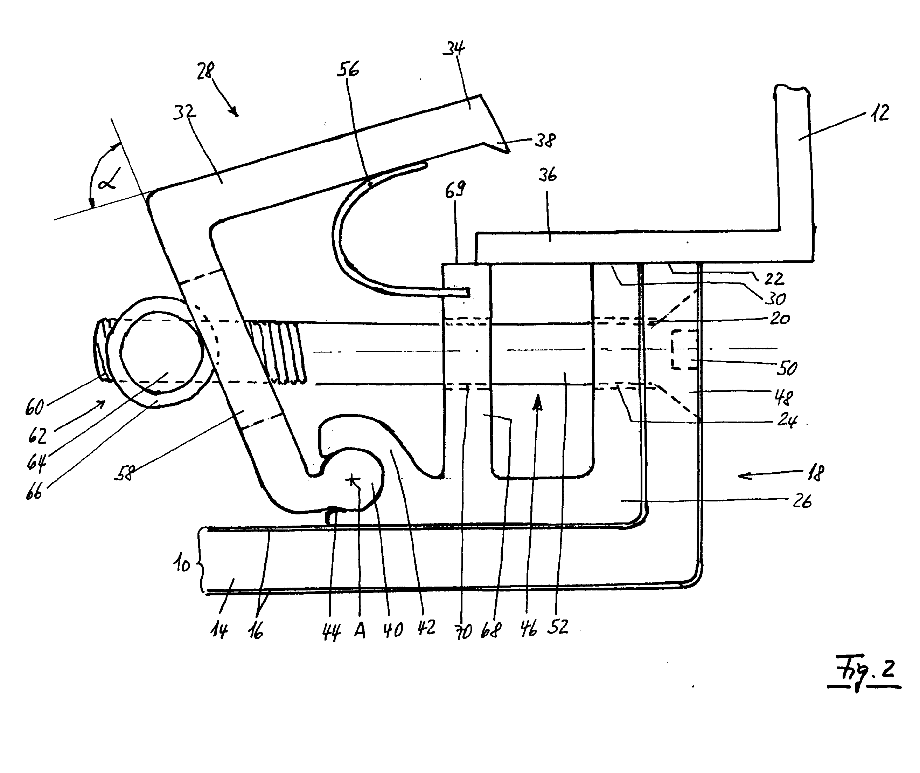

Fig. 2 zeigt ein Klemmstück 28 mit geöffnetem Klemmprofil 32, die Anschlagflächen 44 liegen aufeinander. Im Vergleich zu Fig. 1 weist das Klemmstück von Fig. 2 folgende Unterschiede auf:
- Das Halteprofil 26 hat einen Steg 68 mit einer Bohrung 70, welcher der Führung der Spannschraube 46 dient.
- Die Montagefeder 56 ist in einem Schlitz des Stegs 68 befestigt. Ohne von der Spannschraube 46 augeübte Spannkraft drückt die Montagefeder 56 die Anschlagflächen 44 aufeinander und verhindert ein Auseinanderfallen, weshalb das Spannstück28 leicht montiert werden kann.
- Im vorliegenden Fall ist der Steg 68 so lang ausgebildet, dass der Schenkel 36 des L-förmigen Profils 12 auf einer Auflagefläche 69 abstützt, was den Wirkungsbereich der Eindrücknase 38 vergrössert. Das Profil 12 ist L-förmig ausgebildet, weil es sich um ein Abschlussprofil handelt.

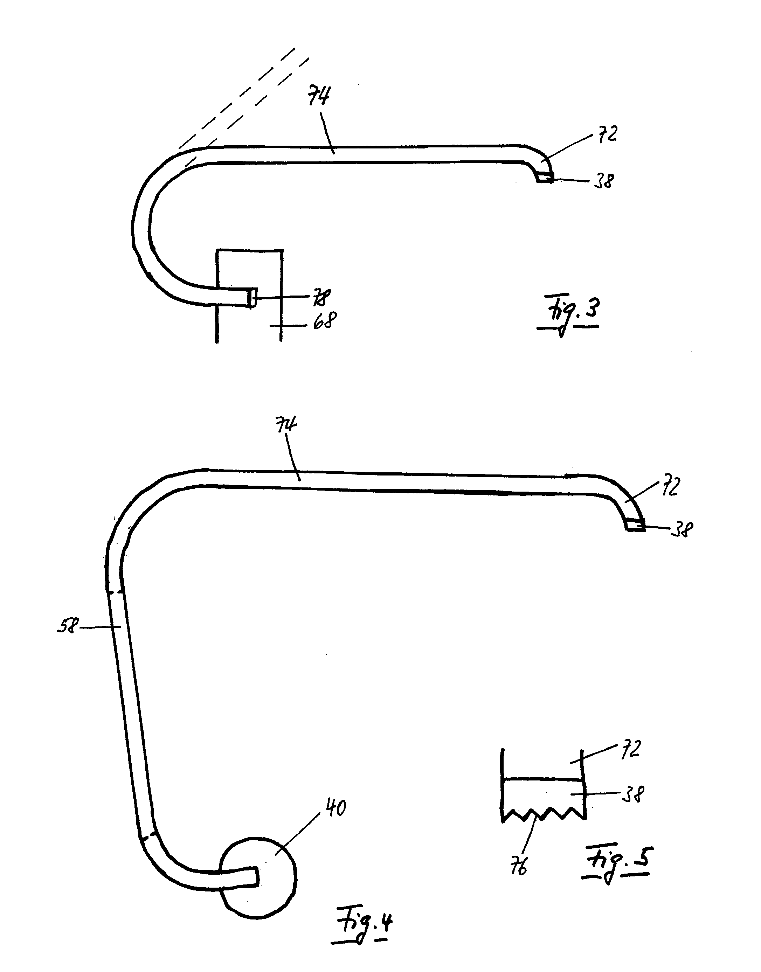

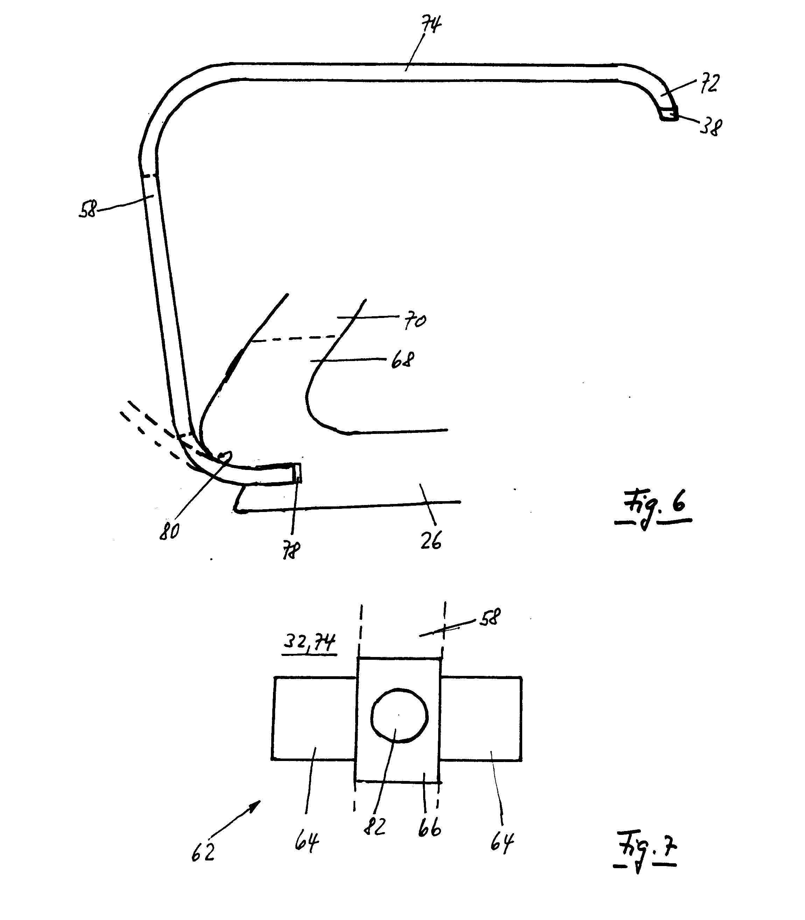

Fig. 3 zeigt eine Klemmfeder 74, welche im Vergleich zur Montagefeder 56 nach Fig. 2 länger ausgebildet und am freien Ende 72 umgebogen ist. An diesem freien Ende ist die Eindrücknase 38 zackenförmig ausgebildet, welche Zacken 76 (Fig. 5) beim Spannen mit dem Schenkel 36 (Fig. 1, 2) einen Formschluss bilden. Die Montagefeder 56 kann deshalb das Klemmprofil 32 (Fig. 1, 2) teilweise ersetzen. Dieses ist in Fig. 3 nicht dargestellt. Die geöffnete Position der Klemmfeder 74 ist gestrichelt angedeutet. Eine Klemmfeder 74 ohne Eindrücknase 38 kann auch eine Montagefeder 56 sein.

In Fig. 4 ist eine Klemmfeder 74 dargestellt, welche so stark ausgebildet ist, dass sie kein unterstützendes Klemmprofil 32 entsprechend Fig. 1, 2 benötigt. Die Klemmfeder 74 ist in einem Längsschlitz eines Schwenkzylinders 40 entsprechend diesen Figuren befestigt.

Die Klemmfeder 74 weist ein Langloch 58 auf, welches von der Spannschraube durchgriffen wird. Eine nicht gezeichnete Schraubenmutter 62 wirkt analog wie bei einem Klemmprofil 32 (Fig. 1, 2).

Beim Schliessen des Klemmstücks wird die Klemmfeder 74 vorerst um die Drehachse des Schwenkzylinders 40 geschwenkt und dann zur Erzeugung des Auflagedrucks deformiert. Dabei werden die in Fig. 5 gezeigten Zacken 76 der Eindrücknase 38 in den Schenkel 36 des T-förmigen Profils 12 gedrückt (Fig. 1).

Die Klemmfeder 74 gemäss Fig. 6 entspricht im wesentlichen derjenigen von Fig. 5, ist jedoch statt in einem Schwenkzylinder in einem Längsschlitz 78 des Halteprofils 26 befestigt. Beim Anziehen der nicht dargestellten Spannschraube 46 (Fig. 1, 2) "wickelt" sich der aus dem Längsschlitz 78 austretende Teil der Klemmfeder40 elastisch um eine gekrümmt ausgebildete Fläche 80 des an das Halteprofil 26 angeformten Stegs 68. Damit wird vermieden, dass in der Klemmfeder 74 ein irreversibler Knick entstehen kann.

Der Ansatz der geöffneten Klemmfeder 74 ist gestrichelt angedeutet.

In Fig. 7 ist, wie bereits erwähnt, eine Schraubenmutter 62 dargestellt, welche im wesentlichen zylinderförmig ausgebildet ist, entsprechend Fig. 1 und 2. Das Mittelstück 66 greift in ein gestrichelt angedeutetes Langloch 58 des Klemmteils, welcher Ausdruck für ein Klemmprofil 32 oder eine Klemmfeder 74 verwendet wird, ein und gewährleistet die Drehsicherung. Die stufenförmig eingeengten Enden 64 liegen neben dem erwähnten Langloch auf dem Klemmteil 32, 74 auf. Die von der Spannschraube durchgriffene Bohrung 82 im Mittelteil 66 hat ein Innengewinde. Fig. 8 zeigt eine Klemmfeder 74 eines Klemmstücks 28 mit einer vielzackigen Eindrücknase 38 (vgl. Fig. 5), welche einen Formschluss zur Unterkonstruktion mit T-fömigen Profilen bilden. Die Klemmfeder 38 wird am freien, schwenkbaren Ende 34 des Klemmprofils 32 niedergehalten. Im übrigen entspricht Fig. 8 den Fig. 1, 2.

## Patentansprüche

1. Halterung für flächige Abdeckelemente (10) mit wenigstens einem abgewinkelten Schenkel (18) an im wesentlichen U-, T- oder L-förmigen Profilen (12) einer Unterkonstruktion,
dadurch gekennzeichnet, dass
ein in beliebiger Lage innenliegend angeordnetes Klemmstück (28) ein am abgewinkelten Schenkel (18) des Abdeckelementes (10) befestigtes, abgewinkeltes Halteprofil (26) und ein vorgespannt schwenk- und/oder elastisch biegbares Klemmteil (32, 74) umfasst, ein Lappen (36) des T- oder L-Profils (12), wenigstens auf der Stirnseite (22) des abgewinkelten Schenkels (18) und/oder auf der Stirnseite (30) des Halteprofils (26) aufliegend, in den Innenraum (R) des Klemmstücks (28) ragt, und das schwenkbare Ende (34, 72) des Klemmteils (32, 74) im Bereich der Auflage (22, 30, 69) auf den Lappen (36) des T- oder L-Profils (12) gespannt ist.

2. Halterung nach Anspruch 1, dadurch gekennzeichnet, dass das schwenkbare Klemmteil als abgewinkeltes Klemmprofil (32) oder als abgerundete, elastisch biegbare Klemmfeder (74) ausgebildet ist, und zwischen Klemmteil (32, 74) und Halteprofil (26) eine Montagefeder (56), vorzugsweise eine Blattfeder, die das Klemmstück (28) öffnende Vorspannung erzeugt.

3. Halterung nach Anspruch 2, dadurch gekennzeichnet, dass das Halteprofil (26) ein Schwenklager (42), das Klemmteil (32, 74) einen die Schwenkachse (A) bildenden Schwenkzylinder (40), oder umgekehrt, umfasst, vorzugsweise mit die Öffnungsbewegung des Klemmteils (32, 74) begrenzenden Anschlagflächen (44).

4. Halterung nach Anspruch 1, dadurch gekennzeichnet, dass das Klemmteil als einends fest im Halteprofil (26) gehalterte Klemmfeder (74) ausgebildet ist, wobei das Halteprofil (26) vorzugsweise eine gekrümmte Auflagefläche (80) für die gespannte Klemmfeder (74) umfasst.

5. Halterung nach einem der Ansprüche 1 bis 4, dadurch gekennzeichnet, dass das schwenkbare Ende (34, 72) des Klemmteils (32, 74) zur Erzeugung eines Formschlusses mit dem Lappen (36) des T- oder L-Profils (12) eine spitzwinklige, vorzugsweise gezackte Eindrücknase (38) aufweist.

6. Halterung nach einem der Ansprüche 1 bis 5, dadurch gekennzeichnet, dass eine drehbare Spannschraube (46) mit versenktem Schraubenkopf (48) den abgewinkelten Schenkel (18), das Halteprofil (26) und das Klemmteil (32, 74) durchgreift und durch eine drehsichere, auf dem Klemmteil (32, 74) aufliegende Schraubenmutter (62) führt.

7. Halterung nach Anspruch 6, dadurch gekennzeichnet, dass das Klemmteil (32, 74) ein Langloch (58) aufweist, in welches ein die Drehsicherung der Schraubenmutter (62) bewirkender Führungsteil (66) ragt, und die auf dem Klemmteil (32, 74) aufliegenden Teile (64) der Schraubenmutter (62) abgerundet sind.

8. Halterung nach Anspruch 7, dadurch gekennzeichnet, dass die Schraubenmutter (62) im wesentlichen stabförmig ausgebildet ist, mit beidends stufenförmig eingeengten, auf dem Klemmteil (32, 74) aufliegenden Enden (64) und einem die Gewindebohrung (82) umfassenden, in das Langloch (58) des Klemmteils (32, 74) passenden Mittelteil (66).

9. Halterung nach einem der Ansprüche 6 bis 8, dadurch gekennzeichnet, dass das Halteprofil (26) benachbart der Schwenkachse (A) einen abkragenden Steg (68) mit einer Bohrung (70) zur Führung des Schraubenschaftes (52) aufweist.

10. Halterung nach Anspruch 9, dadurch gekennzeichnet, dass der Steg (68) einen Führungsschlitz (78) für die Verankerung einer Klemmfeder (74) und/oder einer Montagefeder (54) aufweist.
